# EUROPEAN PATENT APPLICATION

(11) **EP 0 816 895 A1**
(43) Date of publication of application: **07.01.1998**
(21) Application number: 96119180.6
(22) Date of filing: 29.11.1996
(51) Int. Cl.: G02C 1/04

(54) **High-tension filament fastening structure for half-rims of glasses**

(30) Priority: 26.06.1996 JP 185516/96
(71) Applicant: Takeuchi Optical Corporation, Sabae-shi, Fukui-ken 916 (JP)
(72) Inventor: Takeuchi, Ryozoh, Sabae-shi, Fukui-ken, 916 (JP)
(74) Representative: VOSSIUS & PARTNER

(57) **Abstract**

Disclosed is a high-tension filament fastening structure for half-rims (1) of glasses. Either end of the half-rim (1) has through holes (4a, 4b) in a limited terminal area of the free end, and a recess (5) made on the inside of the free end to include the final through hole (4b) closest to the terminal extremity of the half-rim (1). The recess is filled with a cushion piece (6) selected from a plastic piece, metal piece, wood piece or any other elastic piece. Thus, a length of filament (2) passing through the final through hole (4b) is put on the cushion piece (6) to surround the lower circumference of the lens.

The filament (2) will be guaranteed to be free of cutting and letting the lens fall from the half-rim; the filament is prevented from being pushed against the square-edged circumference of the filament outlet of the final through hole.

## Description

The present invention relates to a pair of glasses having half-rims to hold the lenses with filaments stretched therearound, and more particularly to a high-tension filament fastening structure for half-rims of glasses.

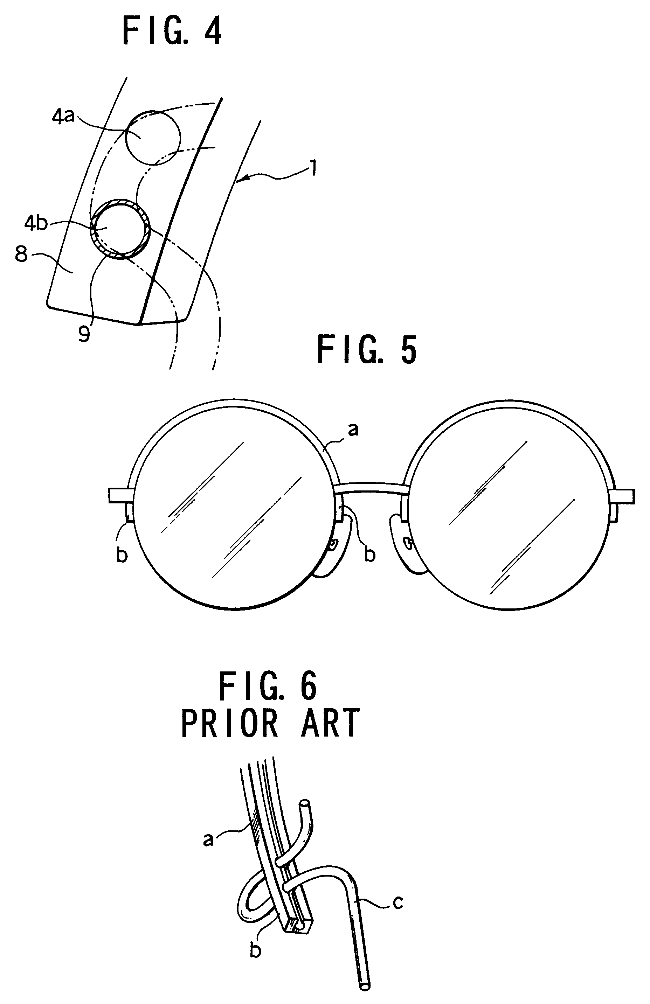

A variety of glasses are commercially available. Half-rim type of glasses have been widely used. Such a pair of glasses comprises two upper half-rims "a" jointed by an intervening bridge, and two lenses fixed to the upper half-rims "a" with filaments "c" stretched around the circumferences of lenses, as seen from Fig.5. The upper half-rims are of metal. Such half-rim type of glasses are light because of no lower half-rims, which are replaced by filaments. Also, advantageously the view field is expanded accordingly. The thread "c" is fixed to the opposite ends of the upper half-rim "a" specifically by inserting each end of the filament "c" in two through holes, which are made in a limited terminal area "b" of the free end of the upper half-rim "a", as seen from Fig.6. As the filament is stretched, it is liable to be cut at the square-edge of the circumference of the final hole from which the filament extends to the lower circumference of the lens.

In view of the above one object of the present invention is to provide a high-tension filament fastening structure for half-rims of glasses, which structure assures that the stretched filaments are not cut at their anchoring locations.

To attain this and other objects of the present invention a high-tension filament fastening structure for half-rims of glasses is improved in that each end of the half-rim has a plurality of through holes in a limited terminal area of the free end, and a recess made on the inside of the free end to include the final through hole closest to the terminal extremity of the half-rim, the recess being filled with a cushion piece selected from a plastic piece, metal piece, wood piece or any other elastic piece, whereby a length of filament passing through the final through hole is put on the cushion piece to surround the lower circumference of the lens.

The final through hole may have a chamfered circumference on its filament-inlet side. The recess may be filled or coated with resin, thereby permitting the filament to run on the resin.

The final through hole may have a chamfered circumference on its filament-inlet side, and the recess is filled or coated with resin, thereby permitting the filament to run on the resin.

Other objects and advantages of the present invention will be understood from the following description of high-tension filament fastening structure for half-rims of glasses according to preferred embodiments of the present invention, which are shown in accompanying drawings.
Fig.1 is a perspective view of a high-tension filament fastening structure according to a first embodiment;
Fig.2 is an enlarged section taken along lines A - A in Fig.1;
Fig.3 is a longitudinal section of the high-tension filament fastening structure;
Fig.4 is a perspective view of a high-tension filament fastening structure according to a second embodiment;
Fig.5 is a front view of a pair of half-rim type of glasses; and
Fig.6 is a perspective view of a conventional high-tension filament fastening structure used in the half-rim type of glasses.

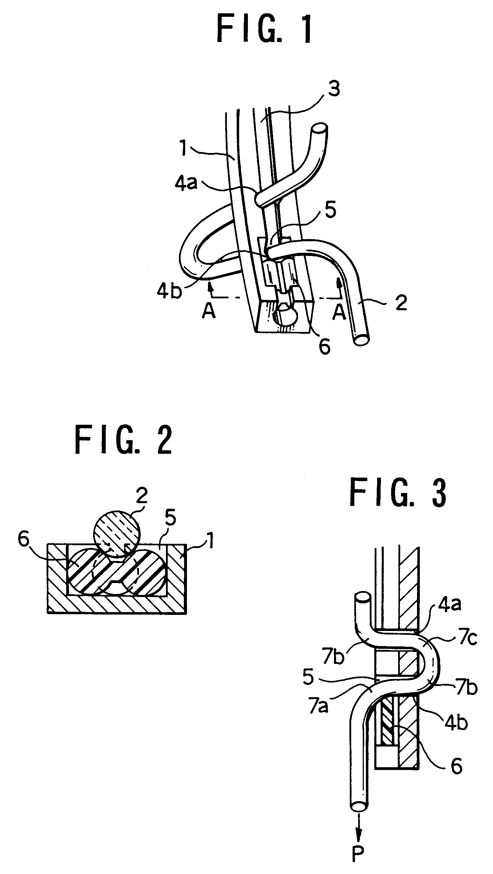

Referring to Fig.1, a high-tension filament fastening structure for half-rims of glasses is formed at either end of the half-rim 1. As seen from Fig.5, each half-rim 1 holds the upper half-circumference of the lens. The left and right half-rims 1, 1 are connected by a bridge on their inner sides, and two joints are attached to these half-rims on their outer sides. Two temples are hinged to the joints so that they may fold on the lenses.

Again referring to Fig.1, the half-rim 1 has a longitudinal slot 3 of rectangular-and-semicircular cross section made in its inner circumference to hold the circumference of the lens. Specifically a band of cocoon-like cross section (not shown) is press-fitted partly in the longitudinal slot 3, leaving the upper semicircular portion of the band on the inner surface of the half-rim, which upper semicircular portion thus exposed is press-fitted in the circumferential slot of semicircular cross section made in the lens. Thus, the lens is held by the half-rim through the agency of the band of cocoon-like section.

Each end of the half-rim 1 has two through holes 4a and 4b made at a predetermined interval in a limited terminal area of the free end, and a recess 5 made on the inside of the free end to include the final or lower through hole 4b. The recess 5 is filled with a plastic piece 6. A length of filament 2 passes through the through holes 4a and 4b. After passing through the lower through hole 4b the filament 2 is put on the cushion piece 6, as best seen from Figs.2 and 3. Thus, the filament 2 cannot be pushed against the square-edged circumference of the lower through hole 4b.

Assuming that the filament 2 passing through these holes 4a and 4b is stretched, the filament 2 is bent at the inlet and outlet sides of each through hole as indicated by 7a, 7b, 7c and 7d. The stress caused in the filament 2 will decrease in the order of first bending 7a, second bending 7b, third bending 7c and fourth bending 7d. This gradual decrease of stress in the filament is attributable to different frictions at these bendings.

As seen from Figs.1 and 2, the plastic piece 6 can be provided by cutting a required length off a cocoon-like band, which is used to hold the lens on the half-rim 1. Such a plastic piece 6 is press-fitted in the recess 5, thereby allowing the filament 2 to ride on the cushion 6 rather than the square-edged circumference of the through hole 4b.

The filler 6 is described as being made of a plastic material, but it can be made of metal or wood. Otherwise, the recess 5 may be filled or coated with resin, thereby permitting the filament to run on the resin. Preferably an epoxy resin may be used because of its adhesive force. As for the plastic piece 6 it cannot be displaced from the recess 5 after the filament 2 is stretched, but conveniently the plastic piece is tentatively held by applying an adhesive agent thereto before stretching the filament 2 lest it should be displaced while stretching the filament 2.

Referring to Fig.4, a high-tension filament fastening structure according to another embodiment is formed at either end of the half-rim 1. As seen from this drawing, the through hole 4b has a chamfered circumference 9 on its filament-inlet side. Although not visible, a recess is made to include the through hole 4b on the opposite side of the half-rim 1, and a plastic piece is press-fitted in the recess in the same way as seen in Fig.3. The chamfered circumference on the filament-inlet side of the hole 4b has the effect of moderating concentration of the second-strongest stress on the filament 2. Otherwise, there is a fear of causing the filament 2 to be damaged and cut at the filament-inlet side of the lower hole 4b. It is unnecessary to chamfer the filament-inlet and -outlet circumferences of the through hole 4a.

As may be understood from the above, the filament fixed to the half-rim by using a high-tension filament fastening structure according to the present invention will be guaranteed to be free of cutting and letting the lens fall from the half-rim; the filament is prevented from being pushed against the square-edged circumference of the filament outlet of the lower or final through hole.

## Claims

1. A high-tension filament fastening structure for half-rims of glasses characterized in that either end of the half-rim (1) has a plurality of through holes (4a,4b) in a limited terminal area of the free end, and a recess (5) made on the inside of the free end to include the final through hole (4b) closest to the terminal extremity of the half rim, the recess (5) being filled with a cushion piece (6) selected from a plastic piece, metal piece, wood piece or any other elastic piece, whereby a length of filament (2) passing through the final through hole (4b) is put on the cushion piece (6) to surround the lower circumference of the lens.

2. A high-tension filament fastening structure for half-rims of glasses according to claim 1 wherein the final through hole (4b) has a chamfered circumference (9) on its filament-inlet side.

3. A high-tension filament fastening structure for half-rims of glasses according to claim 1 wherein the recess (5) is filled or coated with resin, thereby permitting the filament (2) to run on the resin.

4. A high-tension filament fastening structure for half-rims of glasses according to claim 1 wherein the final through hole (4b) has a chamfered circumference (9) on its filament-inlet side, and the recess (5) is filled or coated with resin, thereby permitting the filament (2) to run on the resin.
